# EUROPEAN PATENT APPLICATION

(11) **EP 2 354 610 A1**
(43) Date of publication of application: **10.08.2011**
(21) Application number: 11152392.4
(22) Date of filing: 27.01.2011
(51) Int. Cl.: F16K 31/126, F16K 31/365, F16K 31/385

(54) **Pressure fluid actuated diaphragm valve device and valve control assembly for thermal plants**

(30) Priority: 29.01.2010 IT MI20100130
(71) Applicant: Caleffi S.p.A., 28010 Fontaneto d'Agogna, Novara (IT)
(72) Inventor: Caleffi, Marco, 28010, Fontaneto d'Agogna (IT)
(74) Representative: Coloberti, Luigi

(57) **Abstract**

The diaphragm valve device for thermal plants comprises a valve body (11) having an inlet port (12) and an outlet port (13) for a pressure fluid, a movable closure member (18) for a sealing seat (14), and a diaphragm actuator (19) operatively connected to the closure member (18), by a control rod (20); the control rod (20) comprises a first axial flow path (34) that extends between a first pressure intake (32) and a first pressure chamber (22) of the actuator (19), and a second flow path (34') extending into a second pressure chamber (23, 27) of the actuator (19) conformed for generating a differential pressure between the chambers (22; 23, 27) to move the closure member (18) in an opening position, with a pressure of the fluid at the first pressure intake (32) greater than the pressure of the fluid at a second pressure intake (33) for the second pressure chamber (23, 27). The diaphragm valve device is suitable for being applied to a valve control assembly to prevent the circulation and freezing of the fluid in thermal plants.

## Description

### BACKGROUND OF THE INVENTION

The present invention relates to a pressure fluid actuated valve device of diaphragm type, suitable for allowing and preventing the passage and flowing of a fluid in a thermal plant; the present invention relates also to a valve control assembly provided with said diaphragm valve device, in order to protect a thermal fluid flowing in a thermal plant from any risk of freezing.

### STATE OF THE ART

In the general field of heating systems and in the field of heating plants for buildings, the use is known of heat generating units positioned outside the buildings, in particular heat pumps, solar panels and the like, that, in case of failure and in presence of low temperature in the external environment, are subjected to the risk of freezing of the thermal fluid, typically water, flowing within said thermal plant.

In particular, a thermal plant of the above type conventionally comprises a heat generation unit for heating a thermal fluid, positioned outside a building, and an user for the hot fluid, for example a conventional heating system arranged inside a building, and a hydraulic circuit for flowing the thermal fluid between the heat generation unit and the user; the hydraulic circuit, in turn, comprises a delivery branch for the hot fluid and a return branch, both having a portion of the circuit extending internally and a portion extending externally to said building.

In case of normal working condition of the heat generation unit, the circulating thermal fluid is maintained at a temperature such to prevent said thermal fluid from freezing also in presence of low temperatures in the external environment.

On the contrary, when, for any reason, a failure occurs causing the heat generation unit to stop, the thermal fluid in the external portion of the hydraulic circuit and said heat generation unit, at environment temperatures lower than 0°C, can freeze, causing serious damages.

A commonly adopted solution, to obviate such problem and avoid fluid freezing in the external portion of a thermal plant, consists in adding an antifreeze substance, for example glicole, to the thermal fluid; however, such solution implies a series of drawbacks of both economical nature, tied to the cost of the antifreeze substance, and functional ones, since the addition of an antifreeze substance reduces the efficiency and consequently the performances of the heating system and plant.

In order to solve said drawbacks, some solutions have been suggested providing valve means to stop the circulation and prevent the thermal fluid from freezing, discharging the same fluid from the external portion of the plant.

A solution of this type is known for example from JP-A-2008075958, that discloses a thermal system comprising a heat pump for heating water, wherein the external portion of the circuit for flowing water, in case of failure, is disconnected from a hot water storage tank by a solenoid valve, of normally closed type, arranged on the return branch of the circuit, and a unidirectional check valve arranged on the delivery branch of the circuit; in addition, a further solenoid valve, of normally open type, is provided, that, as a consequence of the failure, provides to drain the water in the external circuit, preventing thus the freezing risk.

However, a solution of this type, in which use of solenoid control valves is made, exhibits a series of drawbacks both of economic nature, tied to the cost and power consumption of said valves, and of functional nature, tied to the reliability of the system and to the necessity to drain the water each time the electric supply fails, regardless of the external temperature and the effective freezing risk, with consequent waste of water.

Pressure assisted valve devices of diaphragm type have been also suggested by EP-A-1114957, GB-A-2068455, DE-A-1077016 and DE-A-2315045 for different or general purposes; nevertheless each of said valve devices exhibits a very complex structure, unsuitable for the scope of the present invention; furthermore none of said document, taken alone, or in combination, discloses or suggests a pressure fluid actuated valve device of diaphragm type for thermal plant, having the features of the present invention.

### OBJECTS OF THE INVENTION

A main object of the present invention is to provide a pressure fluid actuated valve device for thermal plants, that is constructively simple and inexpensive, and that is capable of allowing and preventing a flowing of fluid within a thermal plant, in effective and reliable manner, in order to achieve a protection against a risk of freezing for the fluid in said thermal plant.

Another object of the present invention is to provide a valve control assembly for preventing the flowing of a fluid in a thermal plant comprising a valve device of the above mentioned type that results particularly adapted for allowing a protection against any risk of freezing for the fluid and failure of the same thermal plant.

Summarising, the technical problem to be solved resides in providing a pressure fluid self-actuates valve device of diaphragm type, and a valve control assembly of economical and simple design, while allowing an efficient working and good performances, with a heat generation unit in a thermal plant.

### SUMMARY OF THE INVENTION

According to a first aspect of the invention, all said above objects can be achieved by a valve device of diaphragm type according to claim 1.

In particular, according to the invention, a valve device of diaphragm type has been provided, suitable to allow and prevent the flowing of a pressure fluid in thermal plants, comprising:
a valve body having an inlet port and an outlet port for a pressure fluid, and a sealing seat between said inlet and outlet ports;
a movable closure member for closing the sealing seat; and
a diaphragm actuator operatively connected to the closure member by a control rod, to move said closure member between a closing position and an opening position of the sealing seat;
said diaphragm actuator comprising a hollow body and a flexible diaphragm sealingly disposed between a first pressure chamber on a side of the diaphragm facing the closure member, and a second pressure chamber on a side opposite to the previous one;
said first and second pressure chambers being in fluid communication with a first, respectively a second pressure intake;
in which said control rod comprises a first axial path that extends between the first pressure intake, at the end of the control rod facing the inlet port of the valve body, and the first pressure chamber of the actuator; and
a biasing spring to move the closure member against the sealing seat of the valve body;
characterised in that, said first axial path in the control rod extends with a second axial path opening into said second pressure chamber by a restricted orifice;
said second axial path and said restricted orifice being conformed to enable a circulation of fluid between the first pressure intake and the second pressure intake to generate a pressure drop and a differential pressure between the first and the second pressure chambers, to move the closure member in the opening position, when the pressure of the fluid at the first pressure intake is greater than the pressure of the fluid at the second pressure intake.

According to further aspects of the invention, all said above objects are achieved by a pressure fluid actuated valve control assembly according to claim 7, and by a thermal plant according to claim 5.

### BRIEF DESCRIPTION OF THE DRAWINGS

These and other features of the present invention, will better result from the following description with reference to the enclosed drawings, in which:
Figure 1 is a cross sectional view of the diaphragm valve device according to the invention, in the opened condition;
Figure 2 is a cross sectional view of the diaphragm valve device of figure 1, in the closed condition;
Figure 3 is a view of the pressure fluid actuated valve control assembly, comprising the valve unit according to the invention, in the condition of figure 1; and
Figure 4 is a view of a thermal plant comprising the pressure fluid actuated valve control assembly of figure 3.

### DETAILED DESCRIPTION OF THE INVENTION

The general features of the present invention will be disclosed hereinafter by means of an embodiment example.

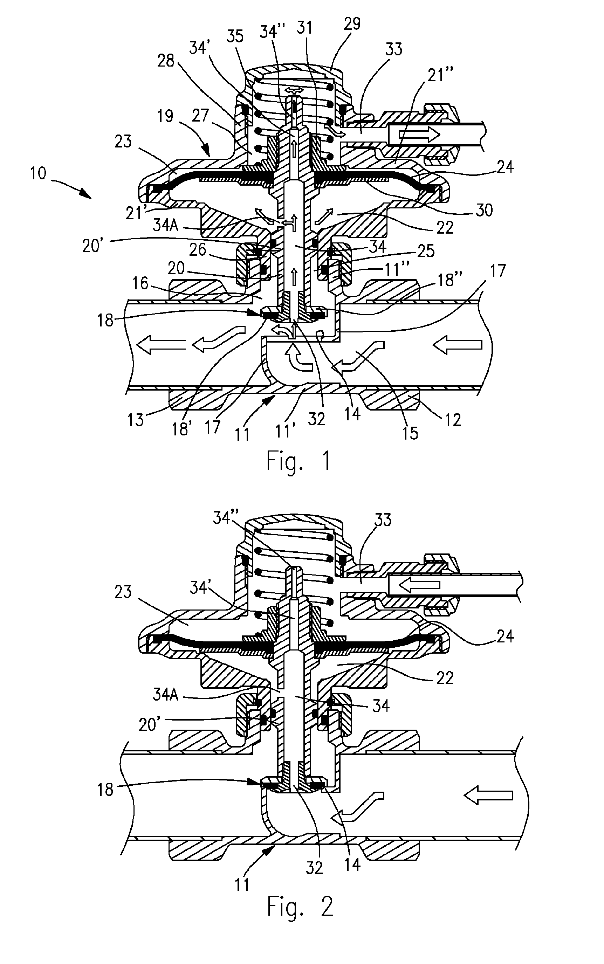

In the figures 1 and 2, a diaphragm valve device according to the present invention is shown, that is particularly suitable for allowing and preventing a fluid to flow in an heating plant, depending on pressure conditions existing in the thermal fluid flowing through the valve device, in order to provide said thermal plant with a protection against the risk of freezing, as disclosed in the following.

The diaphragm valve device, generally indicated by the reference number 10, comprises a valve body 11 having an inlet port 12 and an outlet port 13 for the fluid, and a sealing seat 14 arranged between the inlet port 12 and the outlet port 13.

Preferably, the valve unit 10 comprises a T-shaped valve body 11 having tubular section 11', from which a side connector 11" protrudes; the tubular section 11' defining a longitudinal path 15 for the fluid that extends between the inlet port 12 and the outlet port 13, whereas the connector 11" communicates with the longitudinal flow path 15 through an opening 16 on a side.

The sealing seat 14, of circular shape, preferably lies in a plane parallel to the axis of the longitudinal section 11', or in any case is coaxially arranged to the side connector 11 ", being peripherally in the form of a through hole in a transversal wall 17, provided internally to the longitudinal path 15 of the valve body.

The valve device 10 comprises as well a movable closure member 18 for the sealing seat 14, and a diaphragm actuator 19 operatively connected to the closure member 18 by a control rod 20, in order to move said closure member 18 between a closing position of the sealing seat 14, shown in Figure 2, and an opening position, shown in Figure 1.

Preferably, the closure member 18 as an annular planar seal 18', carried by a support disk 18", fastened to a first end of the control rod 20 facing said sealing seat 14.

The diaphragm actuator 19 comprises in turn a hollow body having a first body portion 21' and a second body portion 21 ", both said body portions having the shape of a cup or a half-shell; a flexible disk-shaped diaphragm 24 is arranged between the two body portions 21', 21" to define first and second pressure chambers 22, 23, wherein the peripheral edge of the diaphragm 24 is sealingly clamped between facing edges of the body portions 21', 21 ".

The first body portion 21', that is arranged near the valve body 11, exhibits an axial hole 25 for the passage of the control rod 20, and a tubular connector 26 that axially and sealingly extends into the connector 11" of the valve body 11 in order to connect the hollow body of the actuator to the valve body 11, for example by a screw ring.

The second body portion 21" exhibits, in turn, an axial hole 27 opening into the second pressure chamber 23, provided by a tubular extension 28 which axially extends on an external side, said tubular extension 28 being sealingly closed by a cap 29.

The diaphragm 24 is therefore positioned into the cavity of the body of the actuator 19 so as to be sealingly disposed between the first pressure chamber 22, on one side of the diaphragm 24 facing the closing member 18, and a second pressure chamber 23, on an opposite side; the diaphragm 24 is provided with an axial hole through which the control rod 20 sealingly extends into the pressure chamber 23; on the side of the diaphragm 24 facing the closing member 18, a holding disk member 30 is provided, which is inserted onto the control rod 20 to abut against a shoulder, whereas on the opposite side of the diaphragm 24 a locking ring 31 is provided, screwed on the rod 20 in order to tighten said diaphragm 24 against the disk member 30, to operatively connect with each other the diaphragm 24 and the rod 20.

The first pressure chamber 22 is in fluid communication with a first pressure intake 32 at an end of the control rod 20 inside valve body 11, whereas the second pressure chamber 23 is in fluid communication with a second pressure intake 33 of the actuator 19, in order to actuate the diaphragm 24, as disclosed in the following.

The control rod 20 is provided with an intermediate piston member to sealingly slide through the hole 25 of the first body portion 21', and is provided with an axial bore defining a first canal or path 34 for the fluid that extends between the first pressure intake 32, at one end of said rod 20, at the inlet side of the valve body 11, and the first pressure chamber 22 of the actuator 19, the axial bore 34 being connected with the first pressure chamber 22 by a side hole 34A, in both opening and closing position of the closure member 18 of the valve unit.

According to the present invention, the axial bore 34 extends in the control rod 20 to provide a second flow path 34' opening into the second pressure chamber 23 of the actuator 19, with a restricted orifice 34" to allow a pressure drop.

Furthermore, a biasing spring 35 is provided to urge the closure member 18 against the sealing seat 14, which biasing spring 35 is arranged on the side of the second pressure chamber 23 of the hollow body 21', 21" for urging the closure member 18 into the closing position, as explained further on.

Preferably, the biasing spring 35 is arranged within the cavity 27 of the tubular extension 28 of the second body portion 21" between the locking ring 31 and the closure cap 29, so as to apply a thrust on the control rod 20.

As schematically shown in Figure 1, according to the invention, the second path 34' and the restricted orifice 34" are conformed to allow the fluid to circulate so as to generate a differential pressure between the first and the second pressure chambers 22, 23 to move the rod 20 and consequently the closure member 18 into the opening position, when the pressure of the fluid at the first pressure intake 32 and inside the first chamber 22 is greater than the pressure at the second pressure intake 33 and inside the second pressure chamber 23.

In particular, the closure member 18 will be in an opening position when the pressure of the fluid in the first chamber 22 is such to generate on the diaphragm 24 a thrust exceeding the sum of the loads applied on the opposite side of the diaphragm 24, by the spring 35 and the pressure of the fluid in the second pressure chamber 23, acting on said diaphragm 24.

Conversely, as shown in Figure 2, the closure member 18 will be in the closing position against the sealing seat 14 when the pressure of the fluid in the first chamber 22 is equal to or less than the pressure of the fluid in the second chamber 23, and the spring 35, being not opposed by any thrust resulting from the diaphragm 35, will be consequently free to apply its own thrust to the closure member 18.

Preferably, in order to obtain all said above, the ratio between the cross sectional area of the orifice 34" and the cross sectional area of the first pressure intake 32, is ranging between 0.3 and 0.9, depending on the features of the diaphragm 24 and the spring 35.

By a valve device 10 according to the invention, the flow of a fluid flowing into a duct of a plant can be interrupted as a function of the pressures of the fluid at two spaced apart or separate points of said duct, or into two distinct ducts; such a feature can be advantageously used to provide a pressure actuated valve control assembly for a freezing protection, as explained in the following.

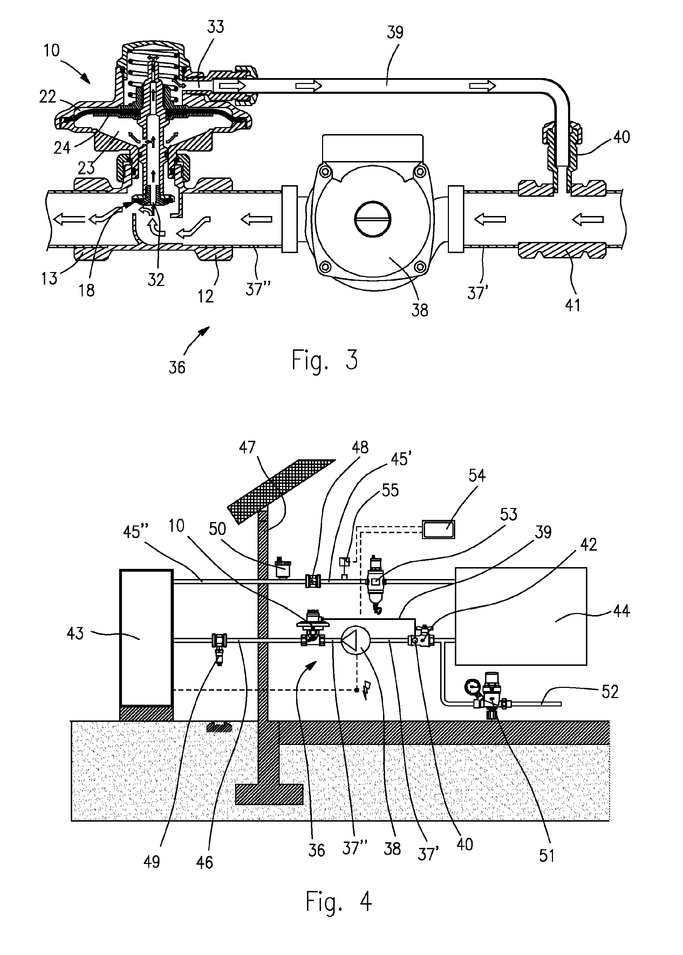

In particular, as shown in Figure 3, the valve device 10 according to the invention can be part of a valve control assembly 36 for interrupting or preventing under certain pressure conditions the flow of a fluid in a duct 37', 37", in which a pumping device 38 is provided for the generation, during working, of a pressure difference between the fluid in the duct portion 37' upstream of the pump 38, and the fluid in the duct portion 37" downstream of said pump 38.

In said valve control assembly, the valve body 11 is connected to the duct portion 37" downstream the pumping device 38, providing that the first pressure intake 32 of the valve device 10 be connected to the same duct 37" on the delivery side of the pumping device 38, while the second pressure intake 33 is connected to the duct 37' upstream on the inlet side of the pumping device 38.

For this purpose, the second pressure intake 33 of the valve device 10, that for example is in the form of a branched connection on a side of the tubular extension 28 of the second portion 21" of the hollow body, is in fluid communication with the upstream duct portion 37' via a conduit or a capillary tube 39, threaded into a connector 40, branched from said duct 37'.

The connector 40, for example, can be connected to a hole on a side of a sleeve 41, positioned along the upstream duct 37', or can be branched from a valve body of a manually actuable valve 42, as schematically shown in Figure 4.

In the above valve control assembly 36, when the circulating pump 38 is in operation, the pressure of the fluid at the delivery side, or into the downstream portion 37" of the duct, results greater than the pressure at the inlet side or into the upstream portion 37' of the duct; consequently, at the first pressure intake 32, positioned at the end of the control rod 20, a pressure will be present greater than the pressure at the second pressure intake 33, which is detected or transmitted through the tube 39 and the second joint 40.

In this condition, the pressure of the fluid in the first chamber 22 will be higher than the pressure of the fluid in the second chamber 23; consequently, according to all previously discussed, the closure member 18 of the valve device 10 will be retained in the opening position, enabling thus the passage of the fluid.

When the pump 38 stops, for example in case of failure of the electric supply, the fluid pressures in the upstream and downstream duct portions 37', 37" of said pump 38 will equalise, or will be the same, just like the fluid pressures in the chambers 22, 23 of the diaphragm actuator 19, causing thus the valve device 10 to actuate the closure member 18 against the sealing seat 14, preventing any flow of fluid through the duct 37', 37".

Consequently, the valve control assembly 36, comprising the valve device 10 according to the invention, provides a solution structurally simple, reliable and economical in order to interrupt the flow of a fluid in a duct, as said valve control assembly 36 does not involve expensive electric or supplemental hydraulic or pneumatic components, subject to failures.

The previously discussed valve control assembly 36 is suitable for being advantageously applied to a thermal plant in order to achieve a protection against freezing for the fluid flowing in said thermal plant.

In particular, as shown in Figure 4, the valve control assembly 36 is connected to a thermal plant comprising a heat generation unit 43, for example an air-water heat pump, for heating a fluid, and an user for the hot fluid, for example a heating system 44 for buildings.

For the circulation of the fluid between the heat generation unit 43 and the user 44, the thermal plant also comprises a hydraulic circuit, having a delivery branch 45', 45" for the hot fluid, and a return branch 46, 37', 37", which extends between the heat generation unit 43 and said user 44.

In particular, the hydraulic plant comprises a portion 45', 37', 37", internal to an isolated environment, for example the interior of a building 47, and a portion 45", 46, external to the building 47, and consequently exposed to a risk of freezing.

In a thermal plant of this type, in case of normal working of the heat pump 43, the flowing thermal fluid, in particular water, is maintained at a hot temperature such to prevent freezing also in presence of low temperature of the external environment.

Conversely, in case of failure, the heat pump 43 will stop to operate, and the thermal fluid within the external portion 45", 46 of the hydraulic plant and within the same heat pump 43, in presence of environment temperatures lower than 0°C, can freeze, causing serious damages.

In order to prevent the fluid in the external portion of the hydraulic system from freezing, in case of failure of the heat pump 43, the thermal plant has been provided with proper valve means for preventing the flow of fluid within the delivery branches 45', 45" and the return branches 37', 37", 46 of the hydraulic system, said valve means being arranged between the external portion 45", 46 and the internal portion 45', 37', 37" of the circuit.

In particular, the valve means comprises a unidirectional check valve 48 on the delivery branch 45', 45" of the fluid, which check valve 48 is arranged on the internal portion 45' of the delivery branch.

In addition, according to the invention, the valve means for preventing a flow of fluid, further comprises, on the return branch 37', 37", 46 of the hydraulic system, a valve control assembly 36 of the type disclosed above, said valve control assembly 36 being arranged at the internal portion 37', 37" of said return branch, inside the building 47.

Owing to the presence of the valve control assembly 36, and the presence of the unidirectional check valve 48, in case of failure, the external portion 45", 46 of the circuit will be isolated from the internal portion 37', 37", 45', and pump 38 will stop.

In order to prevent the fluid in the external portion 45", 46 of the circuit from freezing, which external portion 45", 46 is now isolated from the internal portion, the thermal plant comprises as well at least one drainage valve 49, having a thermostatic actuator conformed and arranged for detecting the temperature of the fluid in the external portion 45", 46 of the hydraulic system, and to open the drainage valve 49.

Preferably, the thermostatic actuator of the drainage valve 49 is of the type comprising a wax bulb arranged into contact with the fluid in the external portion 45", 46 of the circuit, and conformed to open the valve 49 and then to discharge the fluid in said external portion 45", 46 of the circuit, when a fluid temperature equal to or lower than 3°C is detected.

In order to improve the discharge of the fluid, the system may provide a drainage valve 49 on each branch 45", 46 of the external portion of the circuit.

Conversely, when the failure has been removed and electric supply returns, the pump 38 will operate causing the diaphragm valve device 10 to re-open and establishing again a flow of fluid into the circuit, which fluid, heated by the heat pump 43, will cause in turn the drainage valves 49 to close, restoring the normal working conditions.

The thermal plant further comprises an air venting valve 50, preferably arranged on the delivery branch 45', 45" in a point at the interior of the building and positioned between the unidirectional check valve 48 and the heat pump 43.

The air venting valve 50, besides enabling the air to escape from the plant during the normal working, further enables the fluid to be better discharged in case of failure and low temperatures, allowing air to be sucked into the external portion 45", 46 of the circuit.

The thermal plant further comprises a feeding valve 51 for charging the thermal fluid that was discharged; the feeding valve 51 is preferably arranged on a duct 52 for supplying fluid from an external source, not shown, wherein the duct 52 is branched out from the upstream portion 37' of the return branch 37' of the circuit, between the user 44 and the manually actuable valve 42.

In case of normal working of the plant, such fluid feeding valve 51 enables the static pressure of the plant to be maintained at a pre-established value, whereas, in case of failure and subsequent discharge of the fluid from the external circuit, said feeding valve 51 enables the fluid discharged from the drainage valves 49 to be automatically replenished, restoring the static pressure within the plant.

Preferably, the thermal plant also comprises an air/mud removing device 53, for example arranged on the delivery branch 45', between the unidirectional valve 48 and the user 44 inside the building 47, which air/mud removing device 53 is suitable for continuously removing the air and contaminants contained within the circuit.

Preferably, the thermal plant also comprises an electronic control unit 54, the main function of which is to regulate and control the whole thermal plant, as well as comprises a safety thermostat 55, arranged for example on the internal delivery portion 45' of the circuit, in order to detect the temperature of the fluid.

In the case of failure of the only heat pump 43, as the fluid continues to circulate and cool down, the same fluid will run the risk of freezing at low external temperatures; in such a situation, when a water temperature is equal to or lower than 10°C detected by the safety thermostat 55, said thermostat 55 is conformed to provide a control signal to the control unit 54, in response to which control signal, said unit 54 provides to stop the circulating pump 38, isolating thus the external portion 45", 46 from the internal portion 45', 37', 37" of the same circuit, preventing the fluid from freezing.

Owing to the presence of the valve control assembly 36 for preventing the fluid to flow, comprising the diaphragm valve device 10 according to the invention, said thermal plant exhibits a reliable and efficient operation for protecting against the risk of freezing, as said valve unit 10 is fully hydraulic and with limited head losses.

Furthermore, owing to the absence of any electrical systems for actuating said valve means, the cost and the electrical consumption of the system result remarkably reduced.

All was said and shown with reference to the enclosed drawings was given for mere exemplifying and explanatory purpose of the general features of the invention, as well as of a preferred embodiment thereof; consequently, other modifications and variations can be made to the diaphragm valve device for thermal plants, to the valve control assembly to step the flow of a fluid provided with said diaphragm valve device, and to a same thermal plant provided with said valve control assembly, without thereby departing from the enclosed claims.

## Claims

1. Valve device (10) of diaphragm type suitable to allow and prevent the flowing of a pressure fluid in thermal plants, comprising:
a valve body (11) having an inlet port (12) and an outlet port (13) for a pressure fluid, and a sealing seat (14) between said inlet port (12) and said outlet port (13);
a movable closure member (18) for closing said sealing seat (14), and
a diaphragm actuator (19) operatively connected to the closure member (18) by a control rod (20), to move said closure member (18) between a closing position and an opening position of the sealing seat (14);
said diaphragm actuator (19) comprising a hollow body (21', 21 ") and a flexible diaphragm (24) sealingly disposed between a first pressure chamber (22) on a side of the diaphragm (24) facing the closure member (14), and a second pressure chamber (23, 27) on a side opposite to the previous one;
said first and second pressure chambers (22, 23) being in fluid communication with a first, respectively a second pressure intake (32, 33);
in which said control rod (20) comprises a first axial path (34) that extends between the first pressure intake (32), at the end of the control rod (20) facing the inlet port (12) of the valve body (11), and the first pressure chamber (22) of the actuator (19); and
a biasing spring (35) to move the closure member (18) against the sealing seat (14) of the valve body (11);
**characterised in that**, said first axial path (34) in the control rod (20) extends with a second axial path (34') opening into said second pressure chamber (23) by a restricted orifice (34");
said second axial path (34') and said restricted orifice (34") being conformed to enable a circulation of fluid between the first pressure intake (32) and the second pressure intake (33) to generate a pressure drop and a differential pressure between the first and the second pressure chambers (22; 23, 27), to move the closure member (18) in the opening position, when the pressure of the fluid at the first pressure intake (32) is greater than the pressure of the fluid at the second pressure intake (33).

2. Diaphragm valve device according to claim 1, **characterised in that** the ratio between the cross sectional area of the restricted orifice (34") and the cross sectional area of the first pressure intake (32) is ranging between 0.3 and 0.9.

3. Diaphragm valve device according to claim 1, **characterised in that**, the control rod (20) comprises a piston member (20') sealingly slidable in guide bore (25) of a body portion (21') of the actuator (19) facing the valve body (11), and **in that** said first axial path (34) comprises a side hole (34A) for connection to said first pressure chamber (22) of the diaphragm actuator (19).

4. Valve control assembly (36) for preventing the flowing of a pressure fluid in a duct (37', 37"), **characterised by** comprising a valve device (10) of the diaphragm type according to any of the preceding claims 1 to 3 and a pumping device (38) in said duct (37', 37"),
wherein the valve body (11) and first pressure intake (32) are connected to a delivery side of the pumping device (38), and
wherein the second pressure intake (33) is connected to an intake side of the pumping device (38).

5. A thermal plant comprising a heat generating unit (43) for heating a fluid, an user (44) of said heating fluid, and a hydraulic circuit for circulating the fluid, having a delivery branch (45) and a return branch (46) extending between the heat generating unit (43) and the user (44), said hydraulic circuit comprising a portion internal to an isolated environment (47) of the user (44), and an external portion exposed to the risk of freezing, and valve means for preventing the fluid from flowing and freezing in the external portion of the hydraulic system;
**characterised in that**, said valve means comprises a pressure fluid actuated valve control assembly 36 according to claim 4, on said return branch (46) of the hydraulic system.

6. The thermal plant according to claim 5, **characterised in that**, the heat generation unit (43) consists of an air-water heat pump.

7. The thermal plant according to claim 5, **characterised by** comprising a fluid drainage valve (49) on at least one branch (46) of the external portion of the hydraulic circuit.

8. The thermal plant according to claim 5, **characterised by** comprising an air venting valve (50) arranged on at least one branch (45) of the hydraulic circuit.

9. The thermal plant according to claim 5, **characterised by** comprising a safety thermostat (53) on the internal portion of the hydraulic circuit, said thermostat (53) being arranged and conformed to provide a control signal to stop the pumping device (38) when a temperature of the fluid less than 10°C is detached in said internal portion of the circuit.
